**Europäisches Patentamt**

**European Patent Office**

**Office européen des brevets**

(11) Numéro de publication: **0 154 386**
**A2**

## (12) DEMANDE DE BREVET EUROPEEN

(21) Numéro de dépôt: **85200327.6**

(22) Date de dépôt: **06.03.85**

(51) Int. Cl.⁴: **A 01 K 1/062**

(30) Priorité: **09.03.84 BE 2060359**

(43) Date de publication de la demande:
**11.09.85 Bulletin 85/37**

(84) Etats contractants désignés:
**DE FR NL**

㉛ Demandeur. **Vandekeybus, Jozef Raymond Maria**
**Ericalaan 23**
**Kalmthout(BE)**

(72) Inventeur: **Vandekeybus, Jozef Raymond Maria**
**Ericalaan 23**
**Kalmthout(BE)**

(74) Mandataire: **De Rycker, Rudolf, Ir. et al,**
**Vereenigde Octrooibureaux Belgie S.A. Charlottalei 48**
**B-2018 Antwerpen(BE)**

(54) Dispositif pour attacher un animal.

㊐ Le dispositif pour attacher un animal comprend un élément de suspension (3), une pièce basse (5), deux branches (6,7) formant avec la pièce basse (5) un carcan et constituées chacune d'une partie supérieure (6) et d'une partie inférieure (7), des moyens de verrou (45, 46, 47) et un organe d'actionnement (24). Les parties supérieures (6) et les parties inférieures (7) peuvent occuper une position d'ouverture et une position parallèle de fermeture. Les parties supérieures (6) sont suspendues par rapport à l'élément de supension (3) d'une manière telle que l'écartement entre l'élément de suspension (3) et la pièce basse (5) soit approximativement identique pour le carcan fermé, c'est-à-dire lorsque les branches sont parallèles, et pour le carcan ouvert.

./...

Fig. 3

0154386

- 1 -
"Dispositif pour attacher un animal".

L'invention est relative à un dispositif pour attacher un animal, avec :

- un élément de suspension à suspendre au-dessus à une structure fixe,

- une pièce basse qui peut être reliée à la structure fixe,

- deux branches qui se présentent entre l'élément de suspension et la pièce basse, et qui forment conjointement avec la pièce basse, un carcan, branches qui sont chacune constituées par :

-- une partie supérieure qui est suspendue de façon articulée à l'élément de suspension,

et

-- une partie inférieure qui est reliée par l'intermédiaire d'une première articulation, à la partie supérieure et par l'intermédiaire d'une seconde articulation, à la pièce basse, articulations qui permettent au moins un mouvement dans le plan du carcan,

- des moyens de verrou qui empêchent les parties supérieures dans une position de fermeture de pivoter vers l'extérieur dans le plan du carcan, et

- un organe d'actionnement qui se déplace entre une première position, dans laquelle il maintient les parties supérieures écartées l'une de l'autre et ferme partiellement l'espace entre les parties supérieures,et une seconde position, dans laquelle il laisse les parties

- 2 -

0154386

supérieures prendre leur position parallèle,organe
d'actionnement qui est monté par rapport à l'élément
de suspension et agit sur les moyens de verrou.

Un dispositif de ce genre est connu d'après
EU-A-97.406.

Dans ce dispositif connu, les parties supérieures
des branches de carcan pivotent directement dans l'élément
de suspension autour d'axes qui sont perpendiculaires
au plan du carcan et recoupent les lignes d'axe de ces
parties supérieures; dans ce dispositif connu, le passage
de la position de fermeture à l'état d'ouverture du carcan
est provoqué par des cames qui sont présentes sur l'organe
d'actionnement et qui repoussent les portions situées
au-dessus de ces axes des parties supérieures des branches
de carcan l'une vers l'autre lorsque l'organe d'actionnement est amené de la position haute (dénommée ci-avant
la seconde position) à la position basse (dénommée ci-
avant la première position).

Etant donné que les branches de carcan, lors
du passage de la position de fermeture à celle d'ouverture,
s'écartent l'une de l'autre et les parties supérieures
pivotent alors directement autour d'axes horizontaux qui
recoupent les lignes d'axe de ces parties supérieures et
prennent une position fixe dans l'élément de suspension
et donc occupent une hauteur fixe par rapport à la structure
fixe, la pièce basse du carcan remonte donc nettement
lors de ce passage.

Inversément, la pièce basse descend donc lors
du passage de la position d'ouverture à celle de fermeture.

La pièce basse est reliée par l'intermédiaire
d'un élément souple, par exemple une chaîne, au plancher
de la structure fixe. Si cette chaîne est tendue avec le
carcan ouvert, son caractère lâche avec le carcan fermé
dépend de la distance dont la pièce basse descend lors de

la transition. Ce relâchement, qui détermine la liberté de mouvement de l'animal attaché dans la station couché-et-debout, ne peut donc pas être choisi librement et avec le dispositif connu précité, cette liberté est quelquefois plus grande qu'il n'est désiré,ce qui peut contribuer à ce que l'animal laisse tomber ses excréments à un endroit non prévu dans ce but.

Un but de l'invention est d'éliminer cet inconvénient.

Un autre but de l'invention est d'offrir un dispositif du genre précité qui est plus simple et dont entre autres les moyens de verrou et la liaison mécanique entre les moyens de verrou et l'organe d'actionnement peuvent être réalisés plus simplement.

Encore un but de l'invention est d'offrir un dispositif du genre précité dans lequel, avec le carcan ouvert, la pièce basse peut se trouver plus près du plancher.

Encore un autre but de l'invention est d'offrir un dispositif qui peut être suspendu dans une étable avec une hauteur plus limitée au-dessus du plancher,de la poutre nécessaire pour la suspension.

Dans ce but, les parties supérieures sont suspendues dans l'élément de suspension de telle sorte que l'écartement vertical entre la première articulation et l'élément de suspension soit plus petit quand les parties supérieures sont parallèles que quand elles sont écartées.

De préférence, chaque partie supérieure est suspendue dans sa moitié supérieure par rapport à l'élément de suspension, autour d'un axe qui se situe sur le côté opposé à l'autre partie supérieure.

Utilement, les parties supérieures sont suspendues dans l'élément de suspension de telle sorte
que l'écartement entre l'élément de suspension et la pièce
basse soit approximativement identique dans la première
et dans la seconde position de l'organe d'actionnement.

De préférence,

- l'élément de suspension est constitué par

-- une base

et

-- deux bras dirigés vers le bas,

- l'organe d'actionnement est constitué par :

-- une base

et

-- deux bras et

- l'organe d'actionnement pivote dans l'élément de
suspension autour d'un axe qui est parallèle à la base
de l'élément de suspension et à la base de l'organe de
d'actionnement.

Dans une forme de réalisation particulière
de l'invention, les parties supérieures sont suspendues
de manière articulée à différents bras de l'organe
d'actionnement, suivant des axes non parallèles.

Les axes non parallèles se situent par exemple
entre la base de l'organe d'actionnement et l'axe
d'articulation de l'organe d'actionnement par rapport à
l'élément de suspension.

Les axes non parallèles peuvent se recouper
mutuellement entre la base de l'organe d'actionnement
et l'axe d'articulation de l'organe d'actionnement par
rapport à l'élément de suspension.

Dans une forme de réalisation avantageuse de
l'invention, les axes non parallèles se recoupent
mutuellement dans le plan qui est perpendiculaire,au milieu de la base de l'organe d'actionnement.

Dans une forme de réalisation très avantageuse de l'invention, les axes non parallèles se situent avec leurs lignes d'axe dans un plan qui est parallèle à l'organe d'actionnement.

Dans une autre forme de réalisation de l'invention, chaque partie supérieure est suspendue par rapport à l'élément de suspension autour d'un axe horizontal qui est perpendiculaire au plan du carcan et se trouve en dehors de la ligne d'axe de la partie supérieure sur le côté opposé à l'autre partie supérieure.

L'élément de suspension est alors par exemple constitué par :

- une base,

- deux bras dirigés vers le bas avec une section transversale en U qui s'ouvre sur le côté opposé à l'autre bras, bras dans chacun desquels peut trouver place l'extrémité supérieure d'une partie supérieure, et

- deux supports se raccordant au-delà des bras à la base,pour les axes horizontaux et les moyens de verrou peuvent alors être formés par des parties de l'organe d'actionnement qui obturent dans la seconde position de cet organe,les côtés ouverts des bras.

Chaque partie supérieure peut être reliée à l'organe d'actionnement au moyen d'un élément qui est relié à la partie supérieure en dehors de l'axe d'articulation de la partie supérieure par rapport à l'élément de suspension, et qui est relié à l'organe d'actionnement en dehors de l'axe d'articulation de l'organe de d'actionnement par rapport à l'élément de suspension.

Au moins une partie supérieure est alors reliée à l'élément de suspension par un ressort qui tire la partie supérieure vers la position dans laquelle elle est parallèle à l'autre partie supérieure.

D'autres particularités et avantages de l'invention ressortiront de la description ci-après de deux dispositifs pour attacher un animal suivant l'invention; cette description est uniquement donnée à titre d'exemple et ne limite pas l'invention; les chiffres de référence concernent les dessins annexés.

La figure 1 est une vue en élévation frontale d'un premier dispositif pour attacher un animal suivant l'invention, le carcan étant représenté en position fermée.

La figure 2 est une vue en élévation latérale du dispositif suivant la figure 1, le carcan étant représenté en position fermée.

La figure 3 est une vue en élévation frontale du dispositif suivant les figures précédentes, le carcan étant représenté en position ouverte.

La figure 4 est une vue en élévation latérale du dispositif suivant les figures précédentes, le carcan étant représenté en position ouverte.

La figure 5 représente à plus grande échelle une vue en coupe suivant la ligne V-V de la figure 1.

La figure 6 est une vue en élévation dorsale de l'organe d'actionnement du dispositif suivant les figures précédentes, également à une plus grande échelle et dans la position de la figure 1.

La figure 7 est une vue en élévation latérale de l'organe d'actionnement de la figure 6, à l'échelle de cette dernière.

La figure 8 est une vue en élévation frontale d'un second dispositif pour attacher un animal suivant l'invention, le carcan étant représenté en position fermée.

La figure 9 est une vue en élévation latérale du dispositif suivant la figure 8, le carcan étant représenté en position fermée.

La figure 10 est une vue en élévation frontale du dispositif suivant les figures 8 et 9, le carcan étant représenté en position ouverte.

La figure 11 est une vue en élévation latérale du dispositif suivant les figures 8 à 10, le carcan étant représenté en position ouverte.

La figure 12 représente à plus grande échelle une vue en coupe suivant la ligne XII-XII de la figure 9, avec certains éléments éliminés.

La figure 13 reprend à plus grande échelle une partie de ce qui a été représenté à la figure 9.

La figure 14 est une vue en élévation frontale de ce qui a été représenté à la figure 13.

La figure 15 reprend à l'échelle de la figure 13, une partie de ce qui a été représenté à la figure 11.

La figure 16 est une vue en élévation frontale de ce qui a été représenté à la figure 15.

Dans les diverses figures, des chiffres de référence identiques concernent les mêmes éléments ou des éléments remplissant une même fonction.

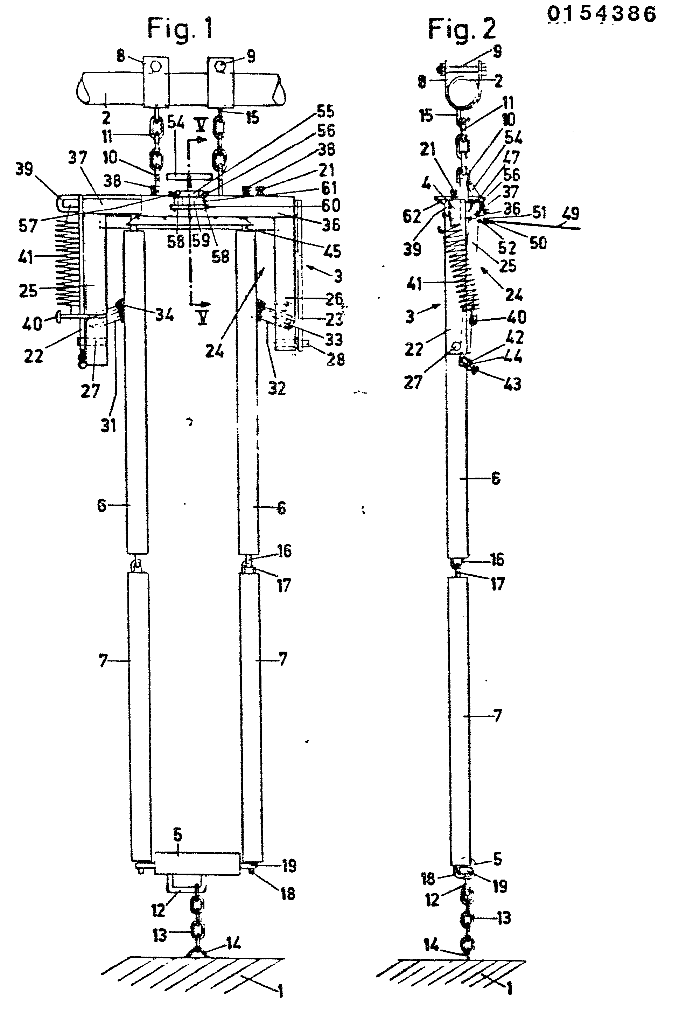

Le dispositif représenté aux figures 1 à 7 pour attacher un animal est monté dans une structure fixe à laquelle appartiennent le plancher 1 et la poutre supérieure 2. Le dispositif est destiné à retenir un bovidé dans une station couché-et-debout. La direction transversale de cette dernière correspond à la direction de la poutre 2. Quand le bovidé pénètre normalement dans la station couché-et-debout, il se déplace suivant la direction longitudinale.

Le dispositif est constitué essentiellement par un élément de suspension 3 et un carcan qui est à son tour constitué par une pièce basse 5 et deux branches de carcan s'y raccordant, qui sont chacune constituées par une partie supérieure 6 et une partie inférieure 7. Les parties 6 et 7 sont reliées de façon articulée entre elles, ainsi qu'à l'élément de suspension 3 et à la pièce basse 5, d'une manière décrite plus en détails ci-après.

L'élément de suspension 3, les branches de carcan 6-7 et la pièce basse 5 se situent dans un même plan, dit plan de carcan, lorsque les branches de carcan prennent la position fermée suivant les figures 1 et 2 et que le carcan se trouve au repos. Au repos, c'est-à-dire quand l'animal n'écarte pas le carcan de la position d'équilibre, l'ensemble du dispositif, en position fermée du carcan, se trouve avec le plan de carcan dans une direction qui correspond à la direction transversale de la station couché-et-debout.

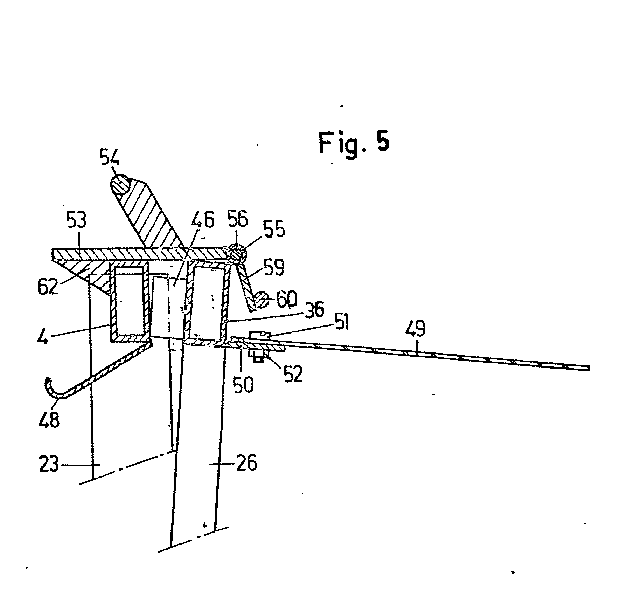

Le dispositif s'étend également dans la direction transversale de la station couché-et-debout lorsqu'il pend librement, mais que le carcan est en position ouverte. Comme il ressort de la figure 4 et comme décrit encore ci-après, le plan déterminé par les parties supérieures 6 des branches d'étrier ne correspond pas alors au plan déterminé par les parties inférieures 7 des branches de carcan. Seul le dernier plan précité est alors vertical.

Sur un côté du dispositif s'étendant au repos dans la direction transversale de la station couché-et-debout, dénommé ci-après le côté avant, la station couché-et-debout possède une mangeoire. L'autre côté du dispositif sera donc dénommé le côté arrière.

L'ensemble du dispositif est fabriqué en métal.

L'élément de suspension 3 est en forme de U et est constitué par une base 4-20 suspendue  horizontale-

0154386

ment et deux bras dirigés vers le bas 22 et 23, soudés aux extrémités de celle-ci. La base de l'élément de suspension 3 est en deux parties et est constituée par une poutre creuse 4 et une latte 20. La partie majeure de la latte 20 se trouve dans la poutre 4; la latte 20 peut être enfoncée plus ou moins profondément dans la poutre 4, de telle sorte que l'écartement entre le bras 22 qui est solidaire de la poutre 4, et le bras 23 qui est solidaire de la latte 20, est réglable. La latte 20 est retenue à la position désirée dans la poutre 4 par les boulons 21 qui sont vissés dans la poutre 4 et exercent une pression sur la latte 20. Les bras 22 et 23 sont aussi constitués par des lattes.

Pour la suspension de l'élément de suspension 3, deux petits étriers de fixation 8 entourent la poutre supérieure et ils sont retenus sur celle-ci par des boulons 9 avec des écrous. Deux oeillets 10 qui sont soudés sur la poutre 4, sont accrochés par l'intermédiaire de chaînes 11, à des crochets 15 qui sont eux-mêmes fixés à la face inférieure des petits étriers de fixation 8. La poutre 4 et donc toute la base 4-20 de l'élément de suspension 3 s'étend ainsi parallèlement à la poutre transversale 2.

Etant donné que les chaînes 11 sont des éléments de suspension souples, elles cherchent sous l'influence du poids de l'élément de suspension et de tout ce qui en pend, la position dans laquelle leurs lignes d'axe sont parallèles entre elles. Au repos, ces lignes d'axe définissent un plan vertical qui s'étend parallèlement à la poutre supérieure 2, donc suivant la direction transversale de la station couché-et-debout.

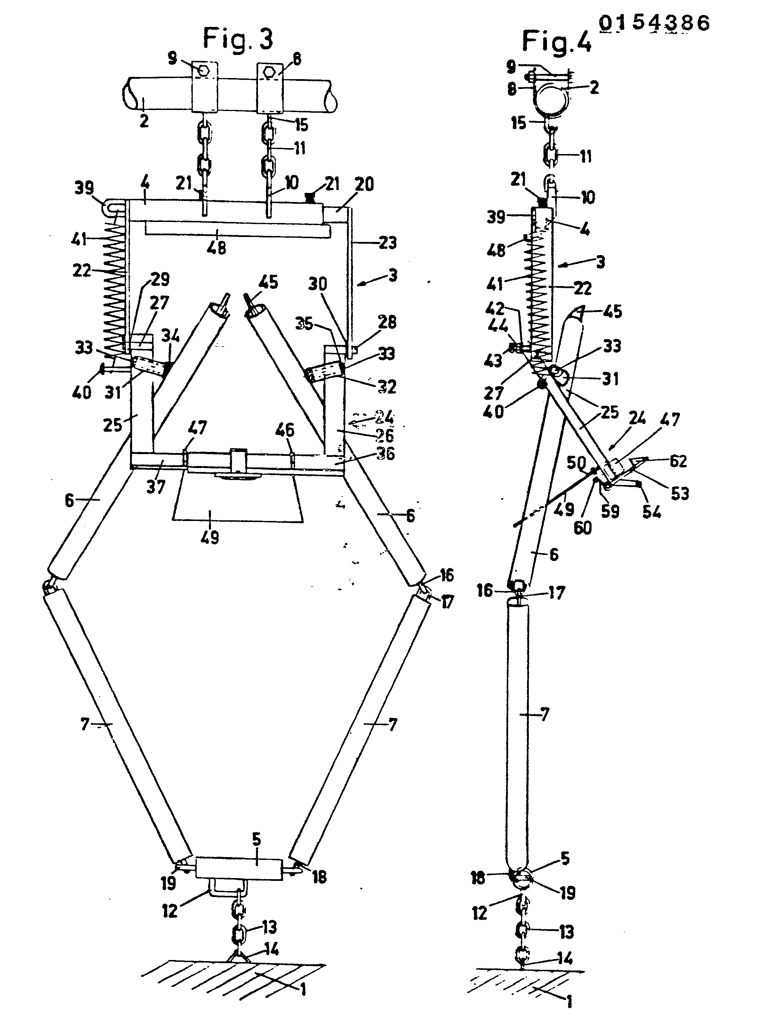

Le carcan, aussi bien dans la position fermée suivant les figures 1 et 2 que dans la position ouverte suivant les figures 3 et 4, s'étend également au moins par approximation, suivant un plan vertical transversal lorsque

- 10 -

0154386

l'élément de suspension 3 se situe dans ce plan. Sous l'influence de l'animal, le carcan et l'élément de suspension 3 peuvent être écartés du plan transversal, mais dès que la force de la pesanteur peut agir librement, le carcan reviendra dans le plan transversal.

Les directions indiquées ci-après des différents oeillets qui relient entre elles les parties de carcan, se réfèrent à la position des parties de carcan lorsque l'élément de suspension 3, les branches de carcan 6-7 et la pièce basse 5 se trouvent dans un même plan, c'est-à-dire le plan de carcan, et que les parties supérieures 6 ainsi que les parties inférieures 7 sont parallèles entre elles. Cette position est représentée aux figures 1 et 2.

Les parties supérieures 6 et inférieures 7 sont des tubes ronds. A leurs extrémités inférieures, les parties supérieures 6 portent des oeillets 16 qui sont perpendiculaires au plan de carcan. Les parties inférieures 7 portent à leurs extrémités supérieures des oeillets 17 qui sont parallèles au plan de carcan et qui s'engagent dans les oeillets 16 des parties supérieures 6.

A leurs extrémités inférieures, les parties inférieures 7 portent des oeillets 18 qui sont perpendiculaires au plan de carcan. Ces oeillets 18 s'engagent dans des oeillets 19 qui sont agencés aux extrémités de la branche de liaison 5. Les oeillets 19 sont horizontaux et sont perpendiculaires au plan de carcan.

Les oeillets 16,17 et 18,19 précités forment des articulations qui permettent un mouvement des parties reliées les unes par rapport aux autres, aussi bien dans le plan de carcan qu'en dehors de celui-ci. Les deux branches de carcan 6-7 peuvent donc prendre la position fermée du carcan suivant les figures 1 et 2, et la position ouverte du carcan suivant les figures 3 et 4. La pièce basse 5 est un tube rond qui s'étend parallèlement au plancher 1. Un

0154386

oeillet 12 qui est soudé par dessous à la pièce basse 5,est relié par l'intermédiaire d'une chaîne 13, à l'oeillet 14 qui est incorporé dans le plancher de la structure fixe.

Le dispositif est donc monté entre la poutre supérieure 2 et le plancher 1, par l'intermédiaire des chaînes 11 et 13. Les chaînes 11 restent sous tension parce que l'ensemble du carcan y est suspendu par l'intermédiaire de l'élément de suspension 3. Comme il ressortira de la description qui suit, la chaîne 13 possède un jeu constant ou approximativement constant, que le carcan occupe la position fermée des figures 1 et 2 ou la position ouverte des figures 3 et 4.

L'ouverture et fermeture du carcan 5-6-7 décrit ci-avant est commandée par un organe d'actionnement 24 en forme d'étrier qui est actionné soit par un bovin, soit par l'homme. L'organe d'actionnement 24 est constitué par une base 36-37 et deux bras 25,26. La base 36-37 est en deux parties et est constituée par une poutre 36 et une latte 37. La majeure partie de la latte 37 se trouve dans la poutre 36, mais une partie de la latte 37 fait saillie hors de la poutre 36. La latte 37 peut donc être enfoncée plus ou moins profondément dans la poutre 36, de telle sorte que l'espacement entre le bras 25 qui est solidaire de la latte 37 et le bras 26 qui est solidaire de la poutre 36, est réglable. Des boulons 38 sont vissés dans la poutre 36 et exercent une pression sur la latte 37, de telle sorte qu'ils déterminent la position de la latte 37 dans la poutre 36.

La latte 37 coulisse hors de la poutre 36 sur le côté opposé par rapport au côté où la latte 20 coulisse hors de la poutre 4. Ceci contribue à la répartition uniforme du poids sur l'ensemble constitué par l'élément de suspension 3 et l'organe d'actionnement 24. L'organe d'actionnement 24 s'articule en fait par les extrémités de ses bras 25 et 26 dans les extrémités des bras 22 et 23 de l'élément de suspension 3. Dans ce but, sur l'extrémité du bras 25 est soudée une goupille 27 dont l'extrémité est supportée dans une ouverture qui est pratiquée dans le bras 22. Une surépaisseur 29 de la goupille 27 s'applique contre le bras 22. Pour les mêmes raisons, sur l'extrémité du bras 26 est soudée une goupille 28 dont une extrémité est supportée dans une ouverture qui est pratiquée dans le bras 23. Une surépaisseur 30 de la goupille 28 s'applique contre le bras 23. Les goupilles 27 et 28 forment un axe qui est parallèle à la base 4-20 de l'élément de suspension 3 et à la base 36-37 de l'organe d'actionnement 24. Sur chacun des bras 25 et 26 de l'organe d'actionnement 24 est soudé un manchon 31, 32, respectivement. Lorsque le carcan prend la position ouverte des figures 3 et 4, les manchons 31 et 32 se situent sur la face avant de l'organe d'actionnement 24 et du dispositif. Les manchons 31 et 32 sont soudés sur les bras 25 et 26 entre les goupilles 27 et 28, d'une part, et la base 36-37, d'autre part. Les lignes d'axe de ces manchons 31 et 32 et donc des goupilles 33 mentionnées ci-après, qui reposent dans ces manchons, se trouvent donc entre la base 36-37 de l'organe d'actionnement 24 et l'axe d'articulation de l'organe d'actionnement 24 par rapport à l'élément de suspension 3, axe d'articulation qui est formé par les lignes d'axe des goupilles 27 et 28. Les lignes d'axe des manchons 31 et 32 et donc des goupilles 33 se recoupent entre la base 36-37 de l'organe d'actionnement 24 et les goupilles 27 et 28 précitées à l'aide desquelles l'organe d'actionnement 24 est articulé dans l'élément de suspension 3. Les lignes d'axe précitées des manchons 31 et 32 et donc des goupilles 33 se recoupent mutuellement dans le plan qui est perpendiculaire au milieu de la base 36-37 de l'organe d'actionnement 24. Les lignes d'axe précitées des manchons 31 et 32 ne sont donc pas parallèles et se situent dans un plan qui est lui-même parallèle au plan défini par les bras 25 et 26 de l'organe d'actionnnement 24. Le point d'intersection de ces lignes d'axe se trouve donc bien entre la ligne d'axe de la base 36-37 et l'axe d'articulation formé par les lignes d'axe des goupilles 27 et 28, mais pas dans le plan qui est défini par cet axe d'articulation et la ligne d'axe de la base . Dans chacun des manchons 31 et 32 est située une goupille 33 qui est soudée sur une partie supérieure 6 d'une branche de carcan. La goupille 33 s'applique par une surépaisseur 34 prévue sur elle, contre le bord du manchon 31 et 32 et est maintenue dans le manchon sur l'autre côté par une goupille fendue 35.

Les goupilles 33 se situent sous un angle tel sur les parties supérieures 6 des branches de carcan, que ces dernières sont parallèles entre elles quand l'organe d'actionnement est dirigé vers le haut, comme représenté aux figures 1 et 2. Lorsque l'organe d'actionnement est dirigé vers le bas, comme représenté aux figures 3 et 4, les goupilles 33 sont dirigées vers le bas à partir des bras 25 et 26, de telle sorte que sous ces goupilles 33, les parties supérieures 6 des branches de carcan divergent et le carcan est ouvert.

Lorsque les branches de carcan 6-7 passent de la position ouverte suivant les figures 3 et 4 à la position fermée suivant les figures 1 et 2, les deux branches de carcan prennent une plus grande hauteur, ce qui devrait normalement laisser la chaîne 13 pendre de façon plus lâche. L'allongement des branches d'étrier est cependant compensé parce que les surépaisseurs 34 qui forment les jonctions entre les goupilles 33 d'une part, et les parties supérieures 6 des branches de carcan d'autre part, sont relevées et en fait pour deux raisons.

Une première raison est que dans la première position de l'organe d'actionnement 24, représentée aux figures 3 et 4, dans laquelle le carcan est maintenu en position ouverte, les goupilles 33 sont dirigées vers le bas à partir des bras 25 et 26, tandis que dans la seconde position de l'organe d'actionnement 24, représentée aux figures 1 et 2, dans laquelle il maintient le carcan en position fermée, les goupilles 33 sont dirigées vers le haut à partir des bras 25 et 26.

Une seconde raison est que les goupilles 33 avec les manchons 31 et 32 dans lesquels elles sont montées, lors du passage de la première à la seconde position de l'organe d'actionnement 24, ont participé au mouvement de pivotement vers le haut de cet organe d'actionnement et donc viennent se situer plus haut dans leur ensemble. Par conséquent, on obtient que la pièce basse 5 du carcan reste approximativement à la même hauteur, que le carcan soit ouvert ou fermé, de telle sorte que la chaîne 13 ne devient pas plus lâche ou plus tendue lors du passage du carcan de la position ouverte à la position fermée, ou vice-versa.

Un ressort spiral 41 est fixé par une extrémité à un oeillet 39 qui est fixé sur la poutre 4 de la base 4-20 de l'élément de suspension 3. L'autre extrémité du ressort spiral 41 se trouve autour de la goupille 40 qui est fixée sur le bras 25 de l'organe d'actionnement 24.

Dans chacune des deux positions extrêmes de l'organe d'actionnement 24, le ressort spiral 41 est sollicité en traction.

Dans la première position de l'organe d'actionnement, représentée aux figures 3 et 4, l'axe géométrique du ressort 41 s'étend à gauche (suivant la figure 4) de la ligne d'axe de la goupille 27. De la sorte, le ressort 41 maintient l'organe d'actionnement 24 dans la première position des figures 3 et 4. Sur le bras 25 de l'organe d'actionnement 24 est soudé un écrou 42 dans lequel est vissé un boulon 43. Un contre-écrou 44 maintient le boulon 43 en position dans l'écrou 42. L'extrémité du boulon 43 s'applique contre le bras 22 de l'élément de suspension 3 lorsque l'organe d'actionnement 24 prend la première position des figures 3 et 4.

Dans la seconde position de l'organe d'actionnement 24, représentée aux figures 1 et 2, la ligne d'axe du ressort 41 s'étend à droite (suivant la figure 2) de la goupille 27 qui forme l'axe d'articulation de l'organe d'actionnement 24 par rapport à l'élément de suspension 3. De ce fait, la poutre 36 de la base de l'organe d'actionnement est maintenue repoussée avec les saillies 46 et 47 indiquées ci-après, contre la poutre 4 de l'élément de suspension 3.

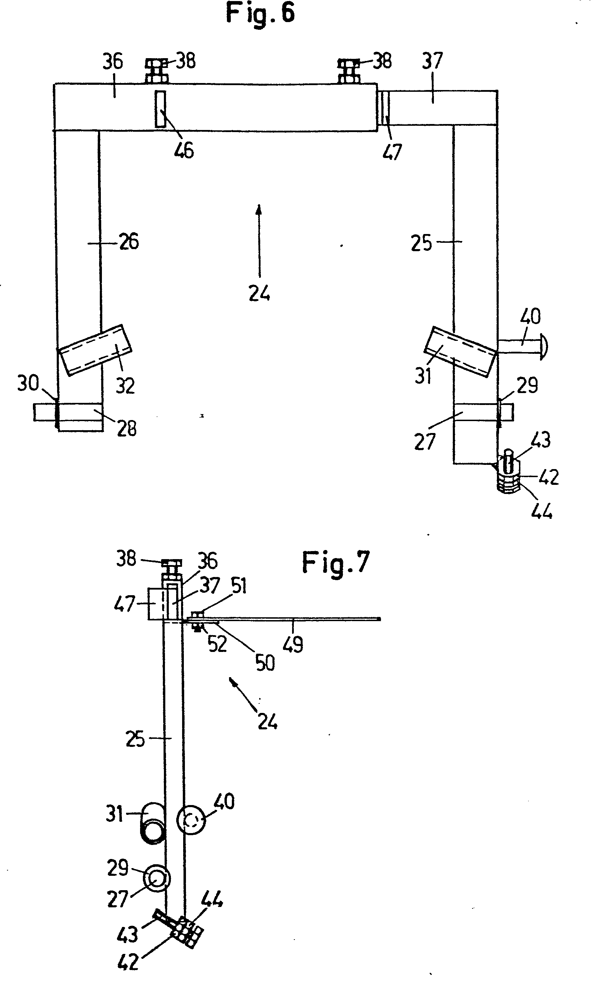

Sur les extrémités supérieures des parties supérieures 6 des branches de carcan sont agencées des saillies 45. En position de fermeture du carcan, représentée aux figures 1 et 2, ces saillies se trouvent contre les faces écartées l'une de l'autre des saillies 46 et 47 qui se présentent, respectivement, sur la poutre 36 et la latte 37 de la base de l'organe d'actionnement 24, comme il ressort particulièrement clairement des figures 3 et 6. Ainsi, en position de fermeture du carcan, on évite que les extrémités supérieures des parties supérieures 6 se rapprochent et donc que les extrémités basses de ces parties supérieures s'écartent mutuellement et que le carcan s'ouvre. Les saillies 45, 46 et 47 forment donc des moyens de verrou qui empêchent les branches de carcan 6-7, dans leur position de fermeture, de pivoter vers l'extérieur dans le plan de carcan; ces moyens de verrou sont amenés automatiquement en position de verrouillage quand l'organe d'actionnement prend sa seconde position et donc amène le carcan en position de fermeture.

Sur la face arrière, la poutre 4 porte une plaque 48 dirigée vers le bas, qui s'étend essentiellement le long de cette poutre, comme il ressort en particulier de la figure 3. Cette plaque 48 empêche que les parties supérieures 6 des branches de carcan parviennent avec leurs extrémités supérieures, au-delà de l'organe de suspension. Comme il ressort de la figure 4, en position ouverte du carcan, ces extrémités supérieures des parties supérieures 6 se trouvent devant l'élément de suspension. Dans la position fermée du carcan, les saillies 45 des extrémités supérieures 6 des branches de carcan se situent entre les poutres 4 et 36.

La poutre 36 de la base de l'organe d'actionnement 24 porte une pièce en caoutchouc 49, qui fait donc partie de l'organe d'actionnement 24. Dans ce but, une plaquette 50 est soudée sur la poutre 36. De petits boulons 51 et écrous 52 fixent la pièce 49 sur la plaquette 50 et donc sur la base de l'organe d'actionnement. Cette pièce s'étend vers l'arrière avec le carcan ouvert, comme il ressort de la figure 4, et vers l'avant avec le carcan fermé, comme il ressort des figures 2 et 5.

Dans la position fermée du carcan, la poutre 36 de l'organe d'actionnement 24 est maintenue contre la poutre 4 de l'élément de suspension 3, par un crochet 53. Le crochet 53 forme un tout avec une petite poignée 54 et un manchon 55. Le manchon 55 est situé autour d'un petit axe 56 qui est supporté dans deux petits paliers 58 qui sont solidaires de la poutre 36. Le manchon 55 se trouve entre les deux petits paliers 58. Sur la face externe du premier petit palier, le petit axe 56 présente une tête, et sur la face externe de l'autre petit palier 58, un petit écrou 57 est vissé sur le petit axe 56. L'ensemble formé par le crochet 53, la petite poignée 54 et le manchon 55 s'articule donc autour du petit axe 56 par rapport à la base de l'organe d'actionnement 24. Sur l'autre côté du manchon 55, le crochet 53 porte encore une saillie 59 avec une broche 60 transversalement sur celle-ci. De petits ressorts 61 qui se trouvent aussi autour du petit axe 56, exercent une pression d'une part sur la poutre 36 et, d'autre part, sur la broche 60. Cette dernière est donc repoussée à partir de la poutre 36, de telle sorte qu'à cause de ces petits ressorts, le bout 62 du crochet 53 est repoussé derrière la poutre 4, lorsque la poutre 36 engage la poutre 4 en position de fermeture du carcan. Dans cette position de fermeture, le crochet 53 repose sur les faces supérieures des poutres 4 et 36.

A l'aide de la petite poignée 54, le crochet de verrou 53 peut être tiré à l'encontre de l'action des petits ressorts 61, jusqu'à ce que la broche 60 rencontre la poutre 36. Le bout 62 du crochet 53 parvient alors au-dessus de la poutre 4 et l'organe d'actionnement 24 peut alors être retiré, à partir de la position de fermeture, de l'élément de suspension 3.

Un animal pénétrant dans la station couché-et-debout trouve le carcan 5-6-7 dans la position ouverte des figures 3 et 4. Etant donné que, comme indiqué ci-avant, la pièce basse 5 n'est pas plus haute dans la position ouverte du carcan que dans la position fermée de celui-ci, cette pièce basse 5 peut se trouver très près du plancher de la station couché-et-debout. L'animal peut, sans effectuer des mouvements anormaux avec la tête, atteindre la mangeoire qui se trouve sur le côté avant du dispositif et il pousse alors avec le cou contre la pièce 49. La base 36-37 de l'organe d'actionnement 24 est ainsi repoussée vers l'avant, de telle sorte que l'organe d'actionnement 24 pivote autour des goupilles 27 et 28 dans l'élément de suspension 3. Le ressort 41 parvient alors très rapidement au-delà du point mort, où l'axe géométrique du ressort 41 recoupe la ligne d'axe commune des goupilles 27 et 28. Après avoir franchi cette position le ressort 41 tire lui-même l'organe d'actionnement vers le haut.

L'organe d'actionnement 24 passe donc de la première position suivant les figures 3 et 4, à la seconde position suivant les figures 1 et 2. Les manchons 31 et 32 qui sont solidaires des bras 25 et 26 de l'organe d'actionnement et qui dans la première position convergent vers le bas et se trouvent en dessous des goupilles 27 et 28, passent donc à la seconde position où ils convergent vers le haut et se trouvent au-dessus des goupilles 27 et 28. Les goupilles 33 qui reposent dans ces manchons et les parties supérieures 6, reliées à ces goupilles, des branches de carcan, prennent part à ce mouvement, de telle sorte que les parties supérieures 6 des branches de carcan passent de la position écartée suivant les figures 3 et 4 à la position parallèle suivant les positions 1 et 2, et en outre remontent aussi. Le carcan 5-6-7 passe donc de la position ouverte à celle de fermeture et ceci a lieu sans que la pièce basse 5 du carcan descende.

Lorsque les parties supérieures 6 des branches de carcan sont parvenues en position de fermeture, les saillies 45 des extrémités supérieures de ces parties supérieures 6 se trouvent sur les faces externes des saillies 46 et 47 de la base 36-37 de l'organe d'actionnement, de telle sorte qu'ainsi le carcan est verrouillé. En outre, les saillies 46 et 47 de la base 36-37 sont venues engager la poutre 4, le crochet 53 étant alors quelque peu soulevé lors du passage de son bout 62 pardessus la poutre 4, à l'encontre de l'action des petits ressorts 61. Lors de l'engagement complet des saillies 46 et 47 contre la poutre 4, le bout 62 est parvenu derrière la poutre 4, de telle sorte qu'ici aussi un verrouillage est provoqué et l'organe d'actionnement ne peut plus se déplacer en sens inverse avant que le crochet 53 ne soit soulevé.

Pour ouvrir le carcan, on tire la poignée 54, de telle sorte que tout d'abord le bout 62 du crochet 53 est retiré de derrière la poutre 4. On peut ensuite, avec la même poignée, tirer l'organe d'actionnement, à l'encontre de l'action du ressort 41, d'abord vers l'avant et ensuite vers le bas, jusqu'à ce que le ressort 41 ait franchi son point mort et maintienne à nouveau l'ouverture dans la position suivant les figures 3 et 4.

En plus des avantages décrits ci-avant, dont un essentiel réside en ce que la pièce basse 5 se trouve à la même hauteur avec le carcan fermé et ouvert, le dispositif suivant l'invention offre encore l'avantage que l'élément de suspension 3 et surtout les bras 22 et 23 de celui-ci peuvent être réalisés plus légèrement que dans le dispositif connu décrit ci-avant, étant donné que suivant l'invention, l'élément de suspension ne doit reprendre aucune autre force que celles de la suspension. Un autre avantage du dispositif suivant l'invention réside dans le fait que la longueur de la base 4-20 de l'élément de suspension 3 et la longueur de la base 36-37 de l'organe d'actionnement 24 sont réglables en continu en fonction de la largeur de l'animal à attacher, et qu'en adaptant la longueur de la base 36-37 de l'organe d'actionnement à cette largeur, on adapte aussi conjointement le verrouillage à cette largeur, parce que les saillies 46 et 47 sur la poutre 36 et sur la latte 37 suivent ce réglage. L'écartement entre les branches 6-7 à l'endroit où se trouve le cou de l'animal, peut donc être réglé simplement et en continu, sans qu'il faille modifier quoi que ce soit aux éléments qui provoquent le passage de l'état fermé à l'état ouvert du carcan, et vice-versa.

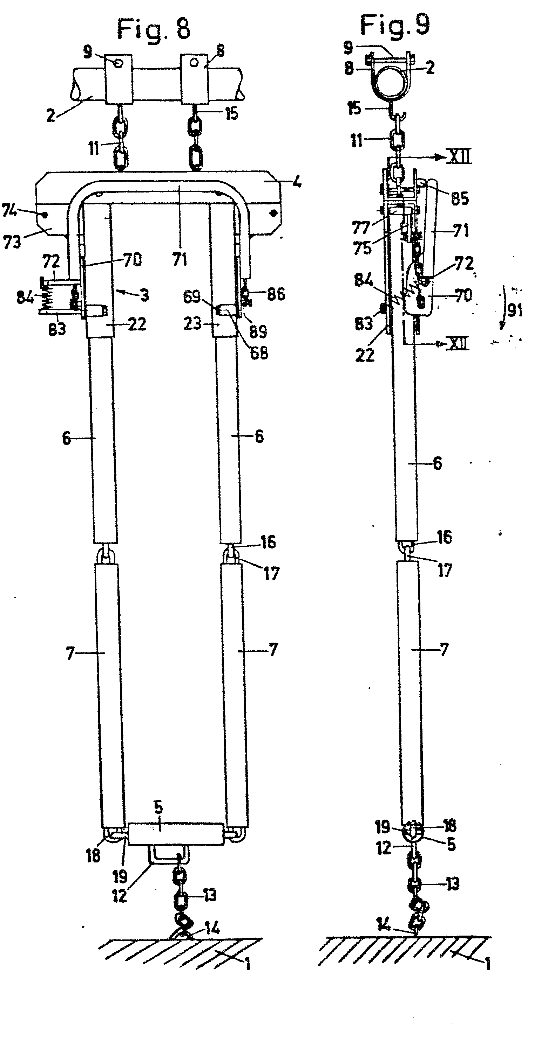

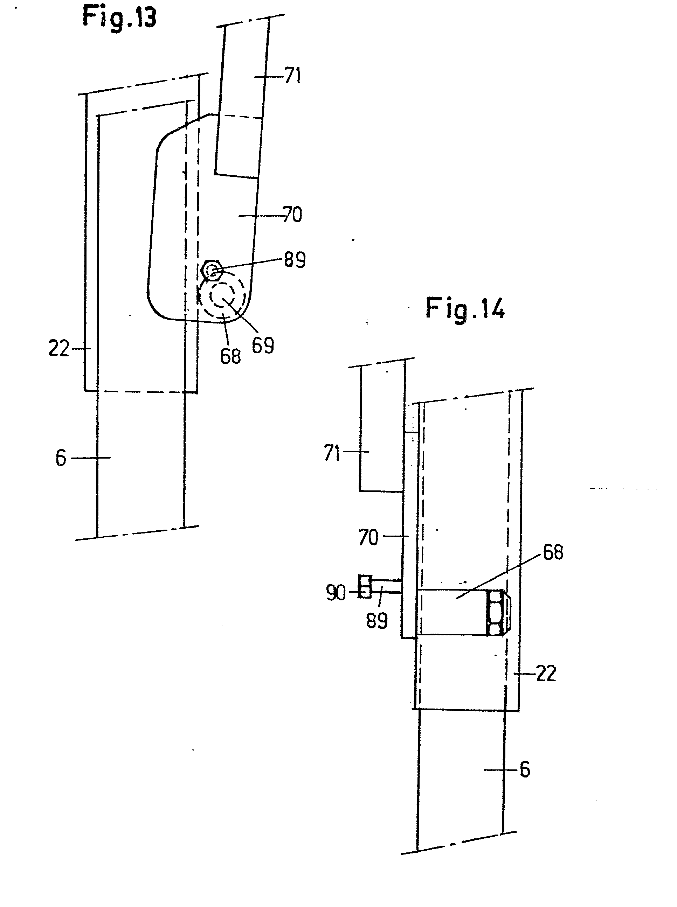

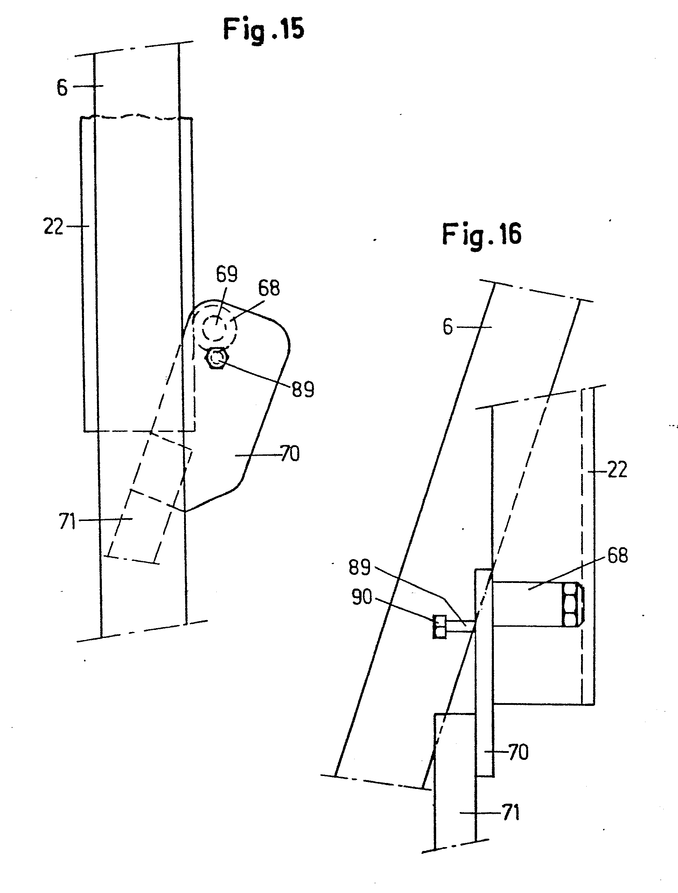

La forme de réalisation suivant les figures 8 à 16 diffère de celle suivant les figures 1 à 7 par les particularités décrites ci-après.

.L'élément de suspension 3 est constitué par une base 4 suspendue horizontalement, deux bras 22 et 23 dirigés vers le bas et soudés aux extrémités de celle-ci, et deux supports 73 dirigés latéralement contre la face inférieure de la base 4, pour les parties supérieures 6 des branches de carcan.

La base 4 de l'élément de suspension 3 est un profilé à section transversale en U, dont le côté ouvert est dirigé vers le haut. Dans ce profilé 4, deux oeillets 10 sont soudés sur sa base et les maillons inférieurs des chaînes 11 s'y engagent. Les bras dirigés vers le bas 22 et 23 sont des profilés à section transversale en U,dont les côtés ouverts sont dirigés à l'opposé l'un de l'autre. Les supports 73 pour les parties supérieures 6 des branches de carcan sont des profilés à section transversale en U, dont la base engage la base de la section transversale en U du profilé 4, de telle sorte que leurs côtés ouverts sont dirigés vers le bas. Les supports 73 engagent les faces dirigées à l'opposé l'une de l'autre des bras 22 et 23.

Les parties supérieures 6 des branches de carcan pivotent dans les supports 73 faisant partie de l'élément de suspension autour de goupilles 74. Dans ce but, deux pièces plates 75 et 76 sont soudées sur chaque partie supérieure 6, du côté extérieur de celles-ci.

La pièce plate 75 s'étend dans le plan de carcan principal et la pièce plate 76 s'étend horizontalement perpendiculairement au plan de carcan principal lorsque le carcan prend sa position fermée suivant les figures 8 et 9.

Chaque pièce plate porte un manchon 77. Les manchons 77 sont situés autour des goupilles 74 qui sont constituées par des boulons qui reposent dans les supports

0154386

73 et s'appliquent contre les surfaces extérieures des branches de ces supports 73, contre une branche par la tête 78 du boulon 74 et contre l'autre branche par un écrou 79 soudé à l'extrémité du boulon.

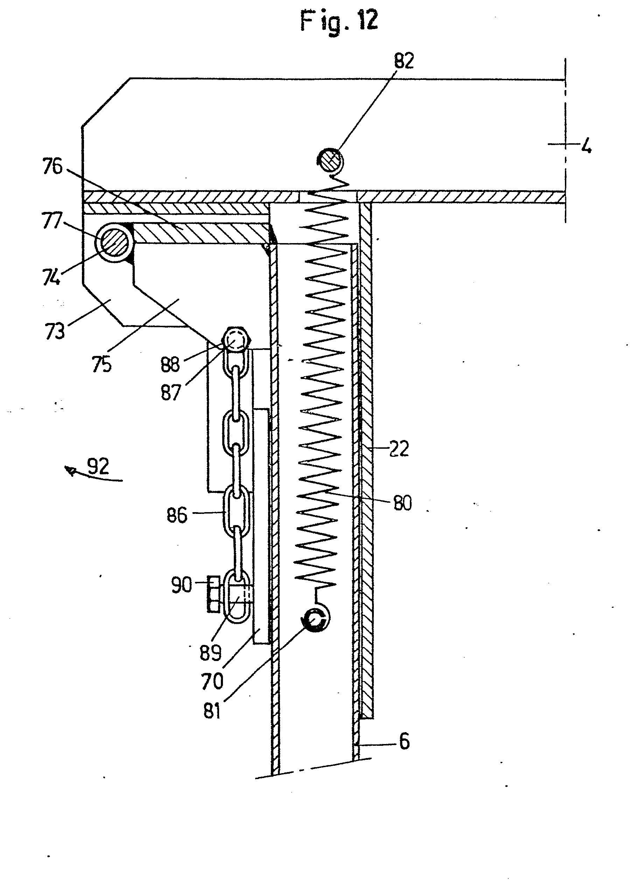

Chaque partie supérieure 6 forme donc un ensemble solidaire d'un manchon 77 qui repose autour d'une goupille 74; cette goupille forme un tout avec l'élément de suspension 3. Les parties supérieures 6 s'articulent donc autour des lignes d'axe de ces goupilles 74 qui sont perpendiculaires au plan de carcan et ne coupent pas les lignes d'axe des parties supérieures 6 mais sont situées plus loin vers l'extérieur, comme il ressort en particulier de la figure 12. Le point le plus haut de la partie supérieure 6 se situe, dans l'état fermé du carcan, représenté aux figures 8 et 9, à la hauteur de la ligne d'axe de la goupille 74, donc à la hauteur de l'axe géométrique d'articulation par rapport à l'élément de suspension 3.

Dans chacune des parties supérieures 6 des branches de carcan est situé un ressort 80 sollicité en traction, dont une extrémité se trouve autour d'une broche 81 qui est agencée fixe dans la partie supérieure 6, et dont l'autre extrémité se trouve autour d'une broche 82 qui est agencée fixe dans le profilé 4. Dans la base du profilé 4 est pratiquée une ouverture pour le ressort 80. La broche 82 est constituée par un boulon qui s'applique contre les surfaces externes des branches du profilé 4, contre une branche par la tête du boulon et contre l'autre branche par un écrou soudé à l'extrémité du boulon.

Etant donné que le ressort 80 se trouve complètement entre la goupille 74 formant axe d'articulation, et la base du bras 22 ou 23 appartenant à l'élément de suspension 3, ce ressort 80 tire la partie supérieure 6 contre cette base, si ceci n'est pas empêché par l'organe d'actionnement 24 décrit ci-après.

Cet organe d'actionnement 24 est constitué par une pièce en forme de U 71 et par deux pièces plates 70 qui sont situées sur les extrémités de la pièce en forme de U 71 et s'étendent suivant des plans verticaux qui sont perpendiculaires au plan de carcan.

Perpendiculairement aux pièces plates 70, celles-ci présentent une goupille 69. Les goupilles 69 sont donc horizontales et parallèles au plan de carcan. Elles se situent dans leur prolongement mutuel et sont supportées dans des manchons 68 qui sont soudés sur les bras 22 et 23 de l'élément de suspension 3. Des écrous qui sont vissés sur les extrémités dirigées l'une vers l'autre des goupilles 69, maintiennent celles-ci dans les manchons 68.

L'organe d'actionnement 24 peut donc pivoter dans l'élément de suspension 3 autour de la ligne d'axe des manchons 68, c'est-à-dire autour d'un axe horizontal qui est parallèle au plan de carcan.

Sur le côté opposé à la goupille 69 de la pièce plate 70 qui se présente à côté du bras 22, est soudée une goupille 72. Sur le bras 22 lui-même est soudée une goupille 83 dirigée vers l'extérieur du carcan. Les goupilles 72 et 83 sont donc toutes deux dirigées vers l'extérieur. Les extrémités d'un ressort 84 sollicité en traction se situent autour des goupilles 72 et 83.

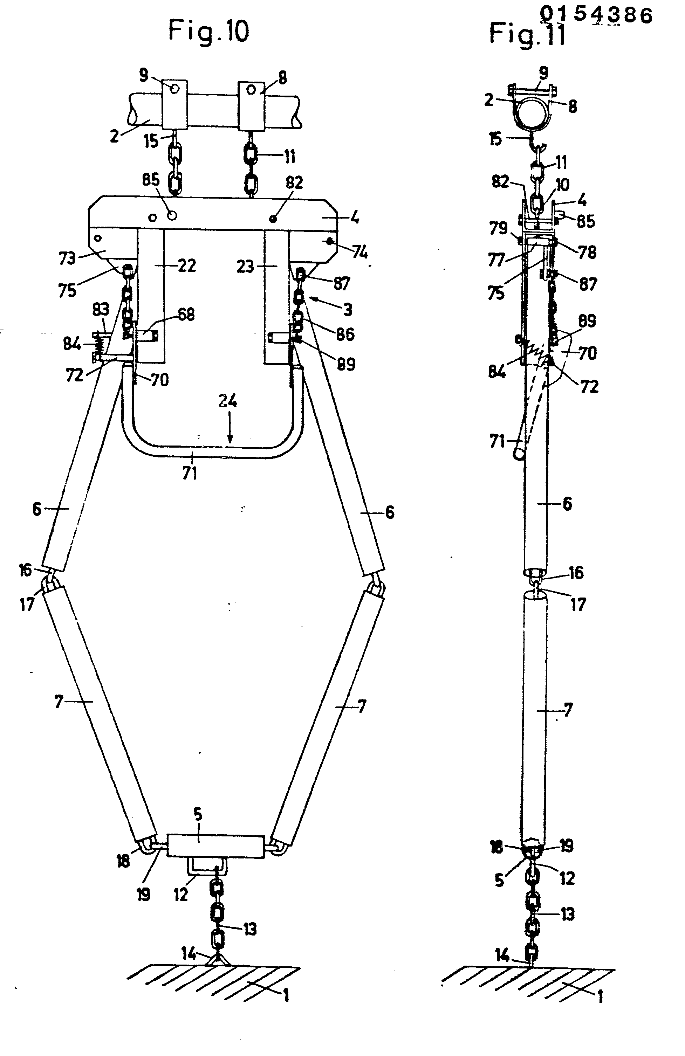

Dans la première position de l'organe d'actionnement 24, correspondant à l'état ouvert du carcan représenté aux figures 10 et 11, l'organe d'actionnement 24 obture partiellement l'espace entre les parties supérieures 6. La ligne d'axe du ressort 84 passe alors en dessous des lignes d'axe des manchons 68, donc en dessous de l'axe d'articulation de l'organe d'actionnement 24 par rapport à l'élément de suspension 3, et il tire

0154386

l'organe d'actionnement 24 avec la goupille 72 contre une partie supérieure 6.

Dans la seconde position de l'organe d'actionnement 24, correspondant à l'état fermé du carcan représenté aux figures 8 et 9, l'organe d'actionnement 24 s'applique par la base de la pièce en forme de U 71 contre un arrêt élastique 85 monté sur le profilé 4, donc en prenant sa position la plus haute.

La ligne d'axe du ressort 84 passe alors au-dessus des lignes d'axe des manchons 68, donc au-dessus de l'axe d'articulation de l'organe d'actionnement 24 par rapport à l'élément de suspension 3, et il tire l'organe d'actionnement 24 contre l'arrêt 85.

Des chaînes 86 relient l'organe d'actionnement 24 aux pièces plates 75 qui sont fixes par rapport aux parties supérieures 6 des branches de carcan. Dans ce but, chacune des pièces plates 75 possède une saillie 87 autour de laquelle repose un maillon terminal d'une chaîne 86. Ce maillon terminal est retenu autour de la saillie 87 par la tête 88 de cette dernière. L'autre maillon terminal de la chaîne 86 se trouve autour d'une saillie 89 d'une pièce plate 70 et y est maintenu par la tête 90 de cette saillie.

Les saillies 89 se situent sur les pièces plates 70 excentriquement par rapport aux goupilles 69 qui forment l'axe d'articulation de l'organe d'actionnement 24 par rapport à l'élément de suspension 3.

Les saillies 89 sont plus proches de la pièce en forme de U 71 que les goupilles 69. Les saillies 89 sont donc situées plus haut quand l'organe d'actionnement 24 prend la seconde position correspondant à la fermeture du carcan, représentée aux figures 8,9,12,13 et 14, par rapport à leur position lorsque l'organe d'actionnement 24 prend la première position correspondant à l'ouverture du carcan, représentée aux figures 10,11 et 15,16.

Dans la position de fermeture du carcan suivant les figures 8 et 9, les pièces plates 70 sont présentes à côté des parties supérieures 6, contre les côtés ouverts des profilés en U 22 et 23.

Les pièces plates 70 empêchent donc que les parties supérieures 6 sortent des profilés 22 et 23 et pivotent vers l'extérieur autour des goupilles 74. Les pièces plates 70 verrouillent donc les parties supérieures 6 dans leur position de fermeture. En outre, dans cette position de fermeture, les ressorts 80 continuent à tirer les parties supérieures 6 contre les bases des profilés en U 22 et 23; les ressorts 80 contribuent donc à maintenir les parties supérieures 6 en position de fermeture.

En position de fermeture, le ressort 84 tire l'organe d'actionnement 24 avec sa pièce en forme de U 71 contre l'arrêt élastique 85 sur le profilé 4 de l'élément de suspension 3. Le ressort 84 maintient donc l'organe d'actionnement 24 dans sa seconde position ou position de fermeture.

Si l'on tire manuellement l'organe d'actionnement 24 de la position de fermeture représentée aux figures 8 et 9 vers la position ouverte représentée aux figures 10 et 11, en tirant sur la base de la pièce en forme de U 71 dans le sens de la flèche 91, les pièces plates 70 s'écartent de devant les côtés ouverts des profilés 22 et 23 à section transversale en U, de telle sorte que le dispositif est déverrouillé. Lors du déplacement vers le bas de l'organe d'actionnement 24, les saillies 89 descendent, de telle sorte que les chaînes 86 exercent une traction sur les saillies 87 et donc sur les pièces plates 75 et celles-ci et par conséquent aussi les parties supérieures 6 pivotent donc autour des goupilles 74 dans le sens de la flèche 92. Les parties supérieures 6 s'écartent mutuellement depuis la position de fermeture représentée aux figures 8 et 9 vers la position ouverte représentée aux figures 10 et 11. Les ressorts 80 sont plus fortement tendus. Le ressort 84 franchit alors son point mort, c'est-à-dire la position où il recoupe l'axe d'articulation de l'organe d'actionnement 24 par rapport à l'élément de suspension 3, donc les lignes d'axe des goupilles 69. Les extrémités de la pièce en forme de U 71 rencontrent finalement les parties supérieures 6. Etant donné que le ressort 84 est parvenu au-delà de son point mort, il maintient la pièce en forme de U 71 et donc l'organe d'actionnement 24 dans cette position où il obture partiellement l'espace entre les parties supérieures.

Il convient de remarquer que le dispositif est suspendu de telle sorte que les manchons 68 se trouvent sur le côté avant, c'est-à-dire le côté de la mangeoire.

Dans la forme de réalisation suivant les figures 8 à 16 également, la pièce basse 5 n'est pas plus haute à l'état ouvert du carcan suivant les figures 10 et 11, que dans l'état fermé du carcan suivant les figures 8 et 9. Lors du passage de l'état fermé à l'état ouvert, les parties supérieures 6 pivotent bien autour d'axes horizontaux, les lignes d'axe des goupilles 74, qui conservent une même hauteur par rapport à l'élément de suspension 3 et donc par rapport à la poutre supérieure 2 et au plancher 1, mais le déplacement vers le haut de la pièce basse 5 qui a pour origine le mouvement d'écartement mutuel des deux branches de carcan 6-7, est compensé parce que les parties supérieures 6 descendent lors du mouvement de pivotement des parties supérieures 6 autour des goupilles 74, qui sont montées à l'extérieur des parties supérieures 6 dans l'élément de suspension 3, à hauteur des extrémités supérieures des parties supérieures 6, lorsque le carcan est en position de fermeture.

L'animal se présentant à l'arrière dans la station couché-et-debout trouve le carcan ouvert; les pièces du dispositif prennent donc la position illustrée aux figures 10 et 11.

Etant donné que la pièce basse 5 n'est pas plus haute à l'état ouvert du carcan qu'à l'état fermé de celui-ci, cette pièce basse 5, dans la forme de réalisation suivant les figures 8 à 16 également, peut se trouver très près du plancher 1 de la station couché-et-debout. L'animal peut, sans effectuer des mouvements anormaux avec la tête, atteindre la mangeoire et il repousse alors avec le cou la base de la pièce en forme de U 71 de l'organe d'actionnement 24. Cette base est alors poussée vers l'avant, de telle sorte que l'organe d'actionnement 24 pivote autour des lignes d'axe des manchons 68.

Les saillies 89 des pièces plates 70 remontent alors, de telle manière que les saillies 87 des pièces plates 75 aussi peuvent remonter et les ressorts 80 peuvent faire pivoter les parties supérieures 6 dans le sens opposé à la flèche 92, jusqu'à ce qu'elles engagent les bases des bras 22 et 23 à section transversale en U et que le carcan soit en position de fermeture.

Lorsque le ressort 84 est parvenu au-dessus de son point mort, c'est-à-dire au-dessus de l'axe d'articulation de l'organe d'actionnement 24 par rapport à l'élément de suspension 3, donc au-dessus des lignes d'axe des goupilles 69, il tire l'organe d'actionnement 24 plus vers le haut, jusqu'à ce que la base de la pièce en forme de U 71 rencontre l'arrêt élastique 85. Dans cette position, les pièces plates 70 ferment suffisamment les côtés ouverts des bras 22 et 23 pour enfermer les parties supérieures 6 dans ces bras. Le dispositif est alors verrouillé.

L'invention n'est en aucune façon limitée aux formes de réalisation décrites ci-avant et dans le cadre de la demande de brevet, de nombreuses modifications peuvent être apportées aux formes de réalisation décrites, notamment en ce qui concerne la forme, la composition, l'agencement et le nombre des composants qui sont utilisés pour la mise en oeuvre de l'invention.

Ainsi par exemple, dans la première forme de réalisation décrite, la longueur de la pièce basse peut aussi être ajustable de la même manière que la longueur des bases de l'élément de suspension et de l'organe d'actionnement.

Dans la seconde forme de réalisation décrite, la longueur de la base de l'élément de suspension, celle de la base de l'organe d'actionnement et aussi celle de la pièce basse peuvent être rendues ajustables.

Il n'est pas non plus strictement nécessaire que dans la première forme de réalisation, l'emplacement et la direction des axes d'articulation des parties supérieures des branches de carcan par rapport à l'organe d'actionnement, ou dans la seconde forme de réalisation l'excentricité des axes d'articulation des parties supérieures par rapport à l'élément de suspension soient choisis de telle sorte que la pièce basse reste à la même hauteur par rapport au plancher à l'état ouvert et fermé du carcan. Une hauteur approximativement égale au-dessus du plancher est suffisante.

La pièce basse peut être constituée par un axe autour duquel les parties inférieures des deux branches de carcan peuvent pivoter. Les secondes articulations sont alors constituées, pour les deux branches de carcan, par cet axe et par les extrémités inférieures des parties inférieures. Ceci revient donc à une liaison articulée directe entre les parties inférieures, liaison dont l'axe d'articulation forme la pièce basse. Les parties des branches de carcan peuvent aussi être de longueur ajustable.

REVENDICATIONS

1. Dispositif pour attacher un animal, avec :

- un élément de suspension (3) à suspendre au-dessus à une structure fixe (1-2),

- une pièce basse (5) qui peut être reliée à la structure fixe (1-2),

- deux branches (6,7) qui se situent entre l'élément de suspension (3) et la pièce basse (5) et qui forment conjointement avec la pièce basse (5), un carcan, branches (6,7) qui sont chacune constituées par

-- une partie supérieure (6) qui est suspendue de manière articulée à l'élément de suspension

et

-- une partie inférieure (7) qui est reliée par l'intermédiaire d'une première articulation (16-17) à la partie supérieure (6), et par l'intermédiaire d'une seconde articulation (18-19) à la pièce basse (5), articulations (16-17 et 18-19) qui permettent au moins un mouvement dans le plan de carcan,

- des moyens de verrou (45-46-47,70) qui empêchent les parties supérieures (6), dans une position de fermeture, de pivoter dans le plan de carcan vers l'extérieur, et

- un organe d'actionnement (24) qui se déplace entre une première position dans laquelle il maintient les pièces supérieures (6) écartées et obture partiellement l'espace entre les parties supérieures (6), et une seconde position dans laquelle il laisse les parties supérieures (6) prendre leur position mutuellement parallèle, organe d'actionnement qui est monté par rapport à l'élément de suspension (3) et agit sur les moyens de verrou (45-46-47,70),

caractérisé en ce que les parties supérieures (6) sont suspendues dans l'élément de suspension (3) d'une manière telle que l'écartement vertical entre la première articu-

- 29 -                                      0154386

lation (16-17) et l'élément de suspension (3) soit plus petit quand les parties supérieures (6) sont parallèles que quand ces parties supérieures (6) sont écartées.

2. Dispositif suivant la revendication 1, caractérisé en ce que les parties supérieures (6) sont suspendues dans l'élément de suspension (3) d'une manière telle que l'écartement entre l'élément de suspension (3) et la pièce basse (5) soit approximativement identique dans la première et la seconde position de l'organe d'actionnement (24).

3. Dispositif suivant l'une ou l'autre des revendications 1 et 2, caractérisé en ce que chaque partie supérieure (6) est suspendue dans sa moitié supérieure par rapport à l'élément de suspension, autour d'un axe (33,74) qui se présente sur le côté opposé à l'autre partie supérieure (6).

4. Dispositif suivant l'une quelconque des revendications précédentes, caractérisé en ce que
- l'élément de suspension (3) est constitué par :
  -- une base (20-4,4)
  et
  -- deux bras (22,23) dirigés vers le bas,
- l'organe d'actionnement (24) est constitué par
  -- une base (36-37,71)
  et
  -- deux bras (25,26,71,70)
et
- l'organe d'actionnement (24) s'articule dans l'élément de suspension (3) autour d'un axe (27-28,69) qui est parallèle à la base de l'élément de suspension (3),et à la base (36-37,71) de l'organe d'actionnement (24).

5. Dispositif suivant la revendication 4, caractérisé en ce que les parties supérieures (6) sont suspendues de manière articulée à l'organe d'actionnement (24).

- 30 -

0154386

6. Dispositif suivant la revendication 5,
caractérisé en ce que les parties supérieures (6) sont
suspendues de manière articulée à différents bras (25,26)
de l'organe d'actionnement (24) suivant des axes non
parallèles.

7. Dispositif suivant la revendication 6,
caractérisé en ce que l'emplacement des axes non parallèles
(33) sur l'organe d'actionnement (24) et leur direction
par rapport aux bras (25,26) de l'organe d'actionnement
(24) sont tels que l'écartement entre la base (20-4)
de l'élément de suspension (3) et la pièce basse (5) est
approximativement le même dans la première et la seconde
position de l'organe d'actionnement (24).

8. Dispositif suivant la revendication 7,
caractérisé en ce que les axes non parallèles (33) se
situent entre la base (36-37) de l'organe d'actionnement
(24) et l'axe d'articulation (27-28) de l'organe
d'actionnement (24) par rapport à l'élément de suspension
(3).

9. Dispositif suivant l'une quelconque des
revendications 6 à 8, caractérisé en ce que les axes non
parallèles (33) se recoupent l'un l'autre entre la base
(36-37) de l'organe d'actionnement (24) et l'axe
d'articulation (27-28) de l'organe d'actionnement (24) par
rapport à l'élément de suspension (3).

10. Dispositif suivant l'une quelconque des
revendications 6 à 9, caractérisé en ce que les axes non
parallèles (33) se recoupent l'un l'autre dans le plan
qui est perpendiculaire au milieu de la base (36-37) de
l'organe d'actionnement (24).

11. Dispositif suivant l'une quelconque des
revendications 6 à 10, caractérisé en ce que les axes non
parallèles (33) se situent avec leurs lignes d'axe dans un
plan qui est parallèle à l'organe d'actionnement (24).

12. Dispositif suivant l'une quelconque des revendications précédentes, caractérisé en ce que les moyens de verrou (45-46-47) sont constitués par des saillies (45) des extrémités supérieures des parties supérieures (6), et par des saillies (46,47) de la base de l'organe d'actionnement (24).

13. Dispositif suivant l'une quelconque des revendications précédentes, caractérisé en ce que la base (4-20) de l'élément de suspension (3) possède une plaque (48) faisant saillie vers le côté des bras (22-23) de cet élément de suspension (3).

14. Dispositif suivant l'une quelconque des revendications précédentes, caractérisé en ce que la base (36-37) de l'organe d'actionnement (24) et la base (4-20) de l'élément de suspension (3) possèdent un verrou (53) en forme de crochet élastique.

15. Dispositif suivant la revendication 14, caractérisé en ce que le verrou (53) en forme de crochet élastique est monté sur la base (36-37) de l'organe d'actionnement (24) et est doté d'une poignée (54).

16. Dispositif suivant l'une quelconque des revendications précédentes, caractérisé en ce que la base (4-20) de l'élément de suspension (3) et la base (36-37) de l'organe d'actionnement (24) sont chacune constituées par deux parties (4,20/36,37) coulissant l'une dans l'autre, et portent un moyen (21,38) qui bloque mutuellement ces parties (4,20/36,37) d'une même base (4-20/36-37).

17. Dispositif suivant les revendications 12 et 16, caractérisé en ce que les saillies (46,47) de l'organe d'actionnement (24) se présentent sur différentes parties (36,37) de la base de celui-ci.

18. Dispositif suivant la revendication 4, caractérisé en ce qu'un ressort (41,84) relie l'élément de suspension (3) à l'organe d'actionnement (24) et présente sa ligne d'axe sur un côté de l'axe d'articulation (27-28,69) de l'organe d'actionnement (24) par rapport à l'élément de suspension (3) lorsque l'organe d'actionnement (24) prend la première position et présente sa ligne d'axe sur l'autre côté de cet axe d'articulation (27-28,69) lorsque l'organe d'actionnement (24) prend la seconde position.

19. Dispositif suivant la revendication 3, caractérisé en ce que chaque partie supérieure (6) est suspendue par rapport à l'élément de suspension autour d'un axe horizontal (74) qui est perpendiculaire au plan de carcan et se trouve en dehors de la ligne d'axe de la partie supérieure (6) sur le côté opposé à l'autre partie supérieure.

20. Dispositif suivant la revendication 19, caractérisé en ce que l'éxtrémité supérieure de la partie supérieure (6) se trouve à la hauteur de l'axe horizontal (74) quand les parties supérieures (6) prennent leur position parallèle.

21. Dispositif suivant l'une ou l'autre des revendications 19 et 20, caractérisé en ce que l'élément de suspension (3)

- comprend une base (4)

et

- deux bras dirigés vers le bas (22,23) avec une section transversale en U qui est ouverte vers le côté opposé à l'autre bras (23,22), bras dans chacun desquels peut trouver place l'extrémité supérieure d'une partie supérieure (6).

22. Dispositif suivant la revendication 21, caractérisé en ce que les moyens de verrou (70) sont constitués par des parties de l'organe d'actionnement (24) qui obturent les côtés ouverts des bras (22,23).

23. Dispositif suivant l'une ou l'autre des revendications 21 et 22, caractérisé en ce que l'élément de suspension (3) comprend deux supports (73) pour les axes horizontaux (74), qui engagent la base (4) au-delà de bras (22,23).

24. Dispositif suivant l'une quelconque des revendications 19 à 23, caractérisé en ce que chaque partie supérieure (6) est reliée à l'organe d'actionnement (24) au moyen d'un élément (86) qui est relié à la partie supérieure (6) en dehors de l'axe d'articulation (74) de la partie supérieure par rapport à l'élément de suspension (3), et qui est relié à l'organe d'actionnement (24) en dehors de l'axe d'articulation (69) de l'organe d'actionnement (24) par rapport à l'élément de suspension (3).

25. Dispositif suivant la revendication 24, caractérisé en ce que l'élément (86) qui relie la partie supérieure (6) à l'organe d'actionnement (24) est souple.

26. Dispositif suivant l'une quelconque des revendications 19 à 25, caractérisé en ce qu'au moins une partie supérieure (6) est reliée à l'élément de suspension (3) par un ressort (80) qui tire la partie supérieure (6) vers la position où elle est parallèle à l'autre partie supérieure (6).

27. Dispositif suivant la revendication 26, caractérisé en ce que le dernier ressort précité (80) est un ressort de traction monté dans la partie supérieure (6).

28. Dispositif suivant l'une ou l'autre des revendications 26 et 27, caractérisé en ce que les deux parties supérieures (6) sont reliées par des ressorts (80) à l'élément de suspension (3).

0154386

Fig. 1

Fig. 2

# Fig. 3

# Fig.4

0154386

0154386

Fig. 5

0154386

# Fig. 6

# Fig. 7

0154386

# Fig. 8

# Fig.9

Fig.10

Fig.11

0154386

0154386

## Fig. 12

0154386

## Fig.13

71

70

89

68  69

22

6

## Fig.14

71

70

90

89

68

22

6

**Fig.15**

**Fig.16**